# EUROPÄISCHE PATENTSCHRIFT

(11) **EP 3 582 521 B1**
(45) Veröffentlichungstag und Bekanntmachung des Hinweises auf die Patenterteilung: **11.09.2024**
(21) Anmeldenummer: 18177654.3
(22) Anmeldetag: 14.06.2018
(51) Int. Cl.: H04W 4/70, G06F 21/64, G06F 21/10, H04L 9/40, H04L 9/00

(54) **VORRICHTUNG UND VERFAHREN ZUM EINRICHTUNG UND/ODER BEREITSTELLEN EINER ARBEITSUMGEBUNG, INSBESONDERE EINGESETZT IN EINER MASCHINEN ECONOMY UMGEBUNG**
DEVICE AND METHOD FOR SETTING UP AND/OR PROVIDING A WORKING ENVIRONMENT, IN PARTICULAR USED IN A MACHINE ECONOMY ENVIRONMENT
DISPOSITIF ET PROCÉDÉ D'AGENCEMENT ET/OU FOURNITURE D'UN ENVIRONNEMENT DE TRAVAIL, EN PARTICULIER APPLIQUÉS DANS UN ENVIRONNEMENT ÉCONOMIQUE DES MACHINES

(43) Veröffentlichungstag der Anmeldung: 18.12.2019
(73) Patentinhaber: Siemens Aktiengesellschaft, 80333 München (DE)
(72) Erfinder: Sauer, Markus, 81739 München (DE); Zeiger, Florian, 85635 Höhenkirchen-Siegertsbrunn (DE)
(74) Vertreter: Siemens Patent Attorneys

(56) Entgegenhaltungen:
- WO-A1-2017/021155
- WO-A1-2017/078723
- WO-A1-2017/167399
- US-A1- 2016 358 143

## Beschreibung

Die Erfindung betrifft eine Vorrichtung und Verfahren zum Einrichtung und/oder Bereitstellen einer Arbeitsumgebung, insbesondere eingesetzt in einer Maschinen Economy Umgebung.

Es besteht ein Bedarf, um mit IT-Security-Mechanismen Produkte, beispielsweise Geräte (z.B. Steuergeräte, Internet-der-Dinge (IoT)-Geräte), Gerätekomponenten oder Softwarekomponenten aber auch Maschinen, Maschinenwerkzeuge oder auch Roboter bzw. robotergesteuerte Komponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik oder von Fertigungssystemen, der Betriebstechnik und von anderen Anlagen in Einsatz.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul eines Geräts oder einer Komponente kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten zu übertragen, können die genannten Geräte mit einer Datenschnittstelle ausgestattet sein, die drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein. Mit Hilfe dieser Datenschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication etc.).

Eine "Machine Economy", die insbesondere im Umfeld von Industrie 4.0 in Einsatz kommen wird, werden autonomen Einheiten (Entities) Dienste (Services) angeboten, wobei die Bedingungen und das Einverständnis (Agreement) zu einem Dienst durch sogenannte Smart Contracts (intelligenter Konsens bzw. intelligenter Konsensvertrag) ausgehandelt und festgelegt werden können. Es gibt verteilte Datenbanken. Für die die verteilte Datenbank nutzenden Einheiten kann eine gemeinsame, verbindliche Geschäftslogik verteilt und/oder zentral hinterlegt sein, die die ausgehandelte und verbindlichen Bedingungen zwischen den Einheiten bzw. das Einverständnis derselben umfassen kann. Als "verbindlich" kann ein Zeitraum verstanden werden, innerhalb dessen die Bedingungen gültig sind bzw. für den das Einverständnis gilt. Im vorliegenden Kontext ist als Geschäftlogik nicht ein rein wirtschaftlicher Konsens zwischen den Einheiten gemeint, sondern es wird durch die Geschäftslogik eine oder mehrere Vereinbarung(en) vorzugsweise hinsichtlich zumindest einer gestellten technischen Anforderung bzw. Voraussetzung bzw. Bedingung - z.B. Ressourcenanforderung bzw. bereitzustellende technische Komponenten bzw. Erfüllung von technischen Standards bzw. Nutzung von bestimmten Protokollen - von den beteiligten Einheiten verlangt. Diese Vereinbarung(en) sollen nicht manipulierbar ausgestaltet sein. Eine besondere Art einer verteilten Datenbank bzw. Distributed Legder ist auf Basis einer Blockketten-Technologie (Blockchain Technology) organisiert. Dezentral können solche Smart Contracts bei den daran beteiligten Einheiten Bedingungen bzw. Vereinbarungen durchsetzen.

Unter einer Blockkette bzw. Blockchain wird im allgemeinen eine in der Regel verteilte Datenbank verstanden, deren Integrität (Sicherung gegen nachträgliche Manipulation) durch Speicherung des Einwegfunktionswertes , auch Hashwert genannt, des vorangehenden Datensatzes bzw. Blocks bzw. Glieds im jeweils nachfolgenden, also durch kryptographische Verkettung, gesichert ist. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Einmal in der Kette auftauchende Transaktionen sind nicht mehr unbemerkt veränderbar. Ein sogenanntes "Orakel" kann verwendet werden, um angepasste /abgeänderte Daten von anderen Quellen in einen Smart Contract einzuführen, welcher zu einem bestimmten Verhalten eines Smart Contracts führen kann. Die Abfolge aller in der Blockchain gespeicherten Transaktionen kann als "Hauptbuch" der Blockchain bezeichnet werden. Eine Art der Blockchain ist eine Out-of-Band-Blockchain oder eine Mischform, bei der einige der Blockchain-Knoten in-band und einige der Blockchain-Knoten out-of-Band miteinander kommunizieren. Unter Out-of-Band-Kommunikation ist hierbei insbesondere eine Kommunikation über ein öffentliches Netzwerk und/oder Kommunikation über ein Netzwerk zu verstehen, das von dem eingangs genannten Netzwerk verschieden ist.

Bekannte Blockchain-Systeme sind Bitcoin und Ethereum. Während Bitcoin ursprünglich für Kryptowährungstransfers geschaffen wurde, baut Ethereum auf das Einbinden von Smart Contracts auf. Das Umsetzen der Vertragsbedingungen bzw. - vereinbarungen wird über dazugehörige durchgeführte Transaktionen kontrolliert: In einem programmierten Smart Contract vorgesehene Folgeaktionen können je nach erfolgter Transaktion durchgeführt werden. Durch die Umsetzung von Geschäftslogik als Smart Contracts in einer Blockchain-Umgebung ist die durch signierte Transaktion angestoßene Ausführung der Geschäftslogik unveränderlich bzw. nicht manipulierbar garantiert.

Eine mögliche Lösung, um den Datenaustausch zwischen zwei Einheiten bzw. Geräten, insbesondere im Umfeld eines SDN-Controllers, mittels einer Blockchain abzusichern, ist in DE 102017217057.3 bereit vorgeschlagen worden.

Zudem ist in EP 18173595.2 eine Steuervorrichtung zum Betreiben eines softwaredefinierten Netzwerks mit einer Anzahl von Netzelementen bereits vorgeschlagen worden, wobei über das in einem Hauptbuch einer Blockchain veröffentlichte Netzabbild ein Abgleich des Netzabbilds der Steuervorrichtung mit einem Netzabbild einer weiteren Steuervorrichtung möglich ist.

Aus WO 2017/021155 A1 ist eine kontrollierte Ressourcenverteilung in einer verteilten Computerumgebung bekannt, die sich lediglich mit der Computerressourcenverteilung bezieht, jedoch auf keine Aufgabenerledigung von Fabrikmaschinen Bezug nimmt.

Wenn ein Konsens zwischen zwei autonomen Einheiten (z.B. zwei Fabrikmaschinen von zwei verschiedenen Herstellern bzw. Firmen) zustande gekommen ist, ist es notwendig, die Kommunikationsinfrastruktur (IT) und Laufzeitumgebung (OT) aufgebaut und konfiguriert wird, um die Ausführung der vereinbarten Transaktion zu bewerkstelligen und zeitgetreu garantieren zu können. Bei der vorgenannten Bitcoin wird eine relativ einfache stackbasierte Laufzeitumgebung verwendet. Eine Transaktion umfasst dabei die Prüfsumme zur Überprüfung der Gültigkeit der Transaktion. Die vorgenannte Blockchain-Plattform Ethereum unterstützt eine frei programmierbare Laufzeitumgebung, sodass der Programmcode einer Blockchain flexibel realisiert werden kann. Dabei wird z.B. eine Geschäftslogik als Programmcode in der Blockchain hinterlegt. So gesehen ist die auszuführende Transaktion als Transaktionsdatensatz in einem (Ketten-)Glied der Blockchain hinterlegt. Es sind weitere Blockketten-Realisierungen z.B. Hyperledger möglich. Hyperledger unterstützt eine frei programmierbare Laufzeitumgebung zur Ausführung von Smart Contracts.

Die genannten Lösungen stellen rein strukturelle Umgebungen zur Ausführung von Smart Contracts zur Verfügung. Sie decken jedoch den operativen Teil und die Ausführung selbst nicht ab.

In den meisten Industrie 4.0-Szenarios besteht der Bedarf, eine flexible Ressourcenzuordnung /-allokierung während des Betriebs des Systems bzw. der Anlage zu ermöglichen bzw. durchzuführen. Auch in Hinblick auf Cloud, Edge-Cloud und/oder Industrie-Edge-Cloud ist eine integrierte Lösung zur einheitlichen und effizienten Ressourcenzuteilung/-verteilung notwendig.

Es besteht ein Bedarf an einer verlässlichen Kommunikation bei einer drahtlosen Übertragung von Steuerdaten und von Zusatzdaten, die für eine Steuerung verwendet werden. Dabei muss davon ausgegangen werden, dass die Funkübertragung temporär gestört oder unterbrochen sein kann.

Es ist Aufgabe der vorliegenden Erfindung, Verfahren und Vor- bzw. Einrichtungen mit gegenüber dem oben genannten Stand der Technik insbesondere im Umfeld von Maschineninteraktionen zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Steuervorrichtung zum Einrichtung und/oder Bereitstellen einer Arbeitsumgebung, die wenigstens eine Ausführungseinheit zur Ausführung zumindest einer Aufgabe umfasst, aufweisend:
- eine Ressourcenverwaltungseinheit zum Anfordern von für die Arbeitsumgebung notwendigen Ressourcen,
- eine Abgleicheinheit, die dazu eingerichtet ist, die angeforderten Ressourcen mit zumindest einer in einer verbindlichen, in einer verteilten Datenbank hinterlegten Vereinbarung vereinbarten Ressource abzugleichen und abhängig vom Abgleichergebnis zuzulassen, wobei
- die Steuervorrichtung dazu eingerichtet ist, die Arbeitsumgebung mit mindestens einer abgeglichenen und zugelassenen Ressource einzurichten und/oder bereitzustellen.

Die verteilte Datenbank ist hierbei vorzugsweise als Blockchain organisiert. Eine oder mehrere solche Vereinbarungen können als Smart Contract zumindest einer Blockchain ausgestaltet bzw. ausgebildet sein.

Die Arbeitsumgebung kann eine virtuelle Arbeitsumgebung sein, d.h. sie ist nur "logisch" bzw. funktional in ihrer Wirkungsweise entsprechend einer physischen Arbeitsumgebung nachgebildet. Es ist denkbar, dass es mehrerer Blockchainstrukturen für eine Gesamtvereinbarung zwischen den eingangs genannten Einheiten gibt. Dann ist diese in mehreren Smart Contracts oder in sich ergänzenden Zuständen eines Smart Contracts organisiert, um einen Konsens zu finden bzw. zu bilden.

Die Ausführungseinheit kann dazu eingerichtet sein, nach Einrichtung und/oder Bereitstellen der Arbeitsumgebung die zumindest eine Aufgabe auszuführen.

Das "Bereitstellen" kann im Zusammenhang mit der Erfindung beispielsweise ein Einrichten, Laden und/oder ein Speichern der Arbeitsumgebung von einem Datenträger bzw. Plattform bedeuten. Das Einrichten, Laden und/oder ein Speichern wird normalerweise durch ein oder mehrere Computerprogrammesoftware- bzw. firmwaremäßig bewerkstelligt.

Zudem kann die Ausführungseinheit dazu eingerichtet sein, das Prüfen auf vollständige Aufgabenerledigung durch eine oder mehrere an der Arbeitsumgebung beteiligte Einheiten zu koordinieren. Dann kann der Endzustand zur vollständigen Erledigung der Aufgabe in einem Smart Contract festgelegt sein. Dieser Endzustand kann dann an andere Einheiten weitergegeben werden.

Die Steuervorrichtung kann dazu einrichtet sein, eine Freigabe der genannten Ressourcen zu veranlassen und/oder diese selbst durchzuführen.

Die Ausführungseinheit kann zudem eine Überwachungseinheit aufweisen, die dazu eingerichtet ist, um die zur Ausführung der mindestens einen Aufgabe notwendigen Parameter zu protokollieren und gegebenenfalls in der Blockchain oder in mehreren Blockchain zu speichern. Die Überwachungseinheit bzw. - komponente , beispielsweise ausgeprägt als Teil von Unterstützungsdiensten (Support-Services) für die (Fabrik-)Aufgaben-Ausführung, die in die Ausführungsinfrastruktur integriert sein kann oder ist, um verschiedene Parameter zu verfolgen und diese in der Blockchain zu speichern. Diese kann beispielsweise für eine spätere Vergebührung oder Eingabeparameter für weitere Smart Contract Verhandlungen bzw. Vereinbarungen verwendet werden, jedoch auch andere Smart Contracts während der Aufgabenausführung (als Seiteneffekt) auslösen.

In einer weiteren Ausführungsform der Erfindung können ein oder mehrere Infrastrukturlieferanten für die Ausführungsumgebung weitere Einheiten in die Verhandlung des Smart Contracts für die Aufgabenausführung einbinden. Die Vereinbarung umschließt dann nicht nur Angebote und die Benutzung eines Service bzw. Dienstes(bspw. ein Herstellungsschritt), sondern auch das Liefern der Ausführungseinheit bzw. einer entsprechend ihrer Funktionalität einschließende Ausführungsinfrastruktur. Die Teilnahme der Infrastrukturlieferanten in der Vertragsverhandlung umfasst dann auch die Ressourcenverteilung für eine gemeinsam geteilte bzw. genutzte Infrastruktur, die dann Teil eines Konsens-Mechanismus ist.

Ein weiterer Aspekt der Erfindung ein Verfahren zum Einrichtung und/oder Bereitstellen einer Arbeitsumgebung zur Ausführung zumindest einer Aufgabe aufweisend folgende Schritte:
- Anfordern von für die Arbeitsumgebung notwendigen Ressourcen,
- Abgleichen der angeforderten Ressourcen mit zumindest einer in einer verbindlichen, in einer verteilten Datenbank hinterlegten Vereinbarung vereinbarten Ressource und Zulassen dieser Ressource abhängig vom Abgleichergebnis, wobei
- Einrichten und/oder Bereitstellen der Arbeitsumgebung mit mindestens einer abgeglichenen und zugelassenen Ressource.

Nach Einrichtung und/oder Bereitstellen der Arbeitsumgebung kann eine Vergebührung der zugelassenen Ressourcen durchgeführt werden. Diese kann abhängig vom Vorrichtungs-/System-Aufbau und des Geschäftsmodells durchgeführt werden.

Die Erfindung weist folgende Vorteile auf:
- Interaktionen zwischen Mensch-Maschine oder Maschine-Maschine wird durch die physikalische und/oder virtuelle Infrastruktur mittels Vereinbarung ermöglicht.
- (Virtuelle) Arbeitsumgebungen werden aufgebaut und geliefert während der Laufzeit des Systems bzw. Anlage, wobei die Vereinbarungen automatisch eingehalten werden und dezentral organisiert sind sowie durch Vereinbarung(en) definiert sind.
- Ressourcenzuteilung wird gesichert gewährleistet und geschützt, wobei optional eine Vergebührung der zugeteilten Ressourcen möglich ist.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann auf einer programmgesteuerten Vorrichtung bzw. Einrichtung der vorstehend genannten Art ablaufen bzw. die Durchführung des erfindungsgemäßen Verfahrens veranlassen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Einrichtung bzw. Vorrichtung und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Figur 1 zeigt schematisch eine Maschinen Economy Umgebung,
Figur 2 zeigt ein erfindungsgemäßer Ablauf zum Aufsetzen einer Arbeitsumgebung.

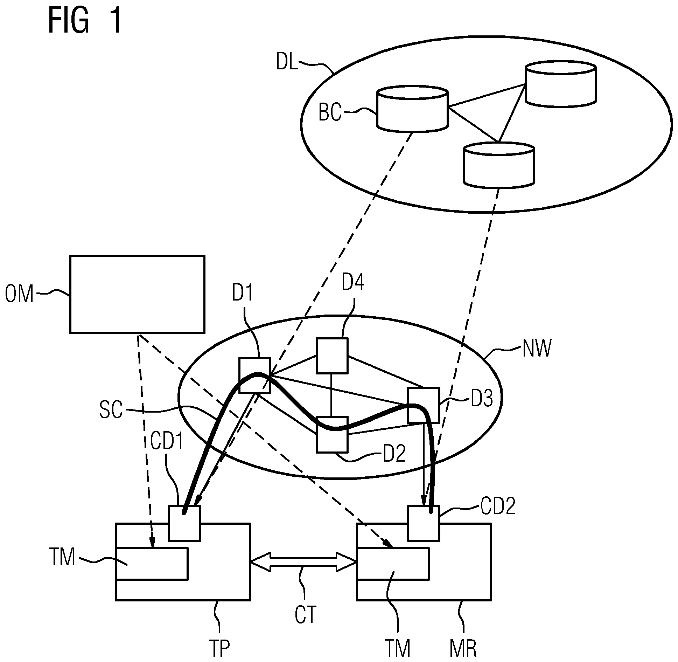

Ein erfinderische Aspekt basiert auf einer dynamischen und on demand (nach Bedarf) Einrichtung einer eine vertrauenswürdige und übereingekommenen Aufgabe (Task), z.B. in Figur 1 mit CT (Kooperationsaufgabe) gekennzeichnet, ausführenden Ausführungs-Infrastruktur (Execution Infrastructure) für Smart Contacts SC, die durch eine Blockchain-Technologie in einer Maschinen Economy Umgebung umgesetzt wird. Unabhängige (d. h. verschiedene Hersteller bzw. Lieferanten) Einheiten (Entities), zum Beispiel Fabrikmaschinen oder Geräte D1 bis D4, bieten und benutzen autonom oder semi-autonom Dienste untereinander und verhandeln, erfüllen sowie dokumentieren Vereinbarungen/Verträge durch einen Distributed Ledger DL, der durch eine Blockchain-Technologie geprägt ist. In Figur 1 ist beispielhaft eine solche Maschinen Economy Umgebung gezeigt. Im Distributed Ledger sind Blockchainknoten BC angedeutet. Die Maschinen sind hierbei beispielsweise eine autonome Transporteinrichtung TP, die ein Aufgaben-Management-Modul TM umfasst und mit einer mobilen Kommunikationseinrichtung CD1 verbunden bzw. ausgestattet ist. Eine weitere Maschine ist beispielsweise ein mobiler Roboter MR, der auch ein Aufgaben-Management-Modul TM sowie eine Kommunikationseinrichtung CD2 aufweist.

Um die Kooperationsaufgabe, die von einem Auftragsmanagement OM gesteuert wird, erfüllen zu können, muss die Kommunikation über das Netzwerk NW zwischen den beiden Maschinen TP und MR sichergestellt und am besten zudem geschützt werden. Hierzu wird ein Kommunikationspfad SC bzw. eine virtuelle Kommunikationsverbindung (virtuellen Netz z.B. VLAN oder SDN, ggf. auch VPN) nach den Bedingungen des Smart Contracts aufgebaut. Letztendlich müssen für die Maschinen Ressourcen angefordert werden, die das Aufsetzen einer Arbeitsumgebung ermöglichen und die Ausführung der Koorperationsaufgabe, die ein oder mehrere Herstellungsaufgaben bzw. schritte umfassen kann, zu gewährleisten. Gegen Manipulation bzw. Angriffe abgesichert wird der Kommunikationspfad mit Hilfe der zuvor ausgehandelten Bedingungen im Smart Contracts und der so entsprechend definierten Struktur des (virtuellen) Kommunikationsnetzwerkes. Die Ressourcen werden von einem Support-Service (Unterstützungs-Dienst), das beispielsweise das Gerät D1 oder auch eine nicht dargestellte Cloud liefern kann, bereitgestellt. Als vorstehend erwähnte Arbeitsumgebung können hier im Beispiel das die Einrichtung der Arbeitsumgebung steuernde Auftragsmanagement OM, die Einheiten TP und MR sowie die über der Kommunikationspfad SC mit den Geräten D1, D2, D3 des Netzwerk NW beteiligt sein, wobei die Ressourcenzuteilung z.B. SC, TM, CD1, CD2, D1, D2, D3 für diese Arbeitsumgebung nach Erreichen bzw. Erfüllung der Smart-Contract-Bedingung(en), die im Distributed Ledger DL hinterlegt sind, erfolgt.

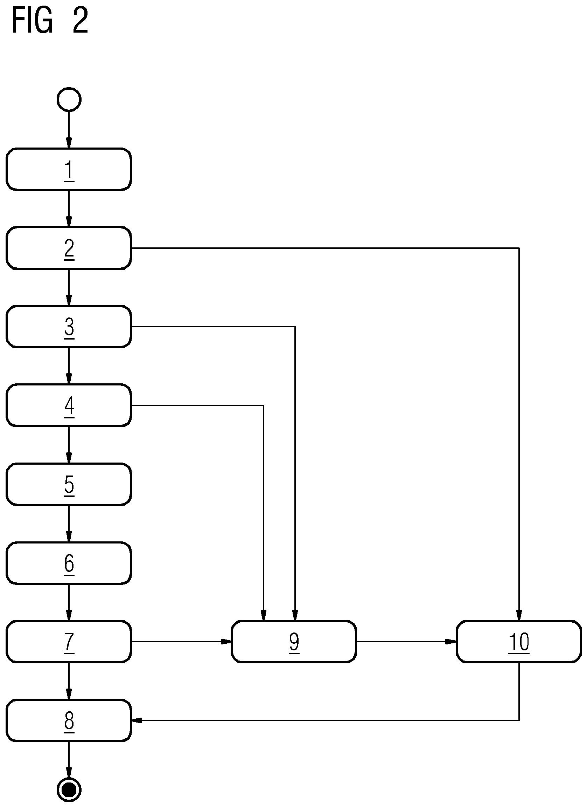

Genauer ausgeführt, setzt eine rechnergestützte Methode eine Arbeitsumgebung bzw. Arbeits-Infrastruktur auf, sobald die Vereinbarung bzw. die sich aus dem Smart Contracts ergebende Bedingung erfüllt ist. Gemäß Figur 2 werden folgende mit Ziffern 1 bis 10 gekennzeichnete Schritte ausgeführt:
Mit 1 gekennzeichnet: eine Vereinbarung treffen: beteiligte Maschinen treffen eine Vereinbarung, die als Smart Contract ausgebildet sein kann, welcher in einer Blockchain gespeichert ist. Diese Vereinbarung umfasst Parameter und erforderliche Service Level Agreements (Vereinbarung über den Dienstumfang) für eine operativ im Betrieb befindliche Infrastruktur. Eine Vereinbarung könnte zum Beispiel sein: Maschine 1, in Figur 1 bspw. MR, hergestellt von Lieferanten A unterstützt bzw. liefert eine Aufgabe B, in Figur 1 bspw. CT, für Maschine 2, in Figur 1 bspw. TP hergestellt von Lieferanten C für einen Preis D in einem Zeitfenster E mit Anforderungen X (z.B. MaschinenID), Y (z.B. Kommunikationsdienstanforderung), Z (z.B. Ressourcenanforderung), in Figur 2 in Schritt 2 wird bspw. Z angefordert, an die Ausführungsinfrastruktur bzw. Arbeitsumgebung.

Mit 2 gekennzeichnet: Ressourcenanforderung: der Smart Contract beinhaltet Infrastruktur-Anforderungen, um Infrastrukturhersteller bzw. -lieferanten einzubinden. Eine solche Anforderung wird durch einen Smart Contract signiert und umfasst zum Beispiel die Maschinen-Identifikation (ID), Maschinensignaturen, Kommunikationsdienstanforderungen und Anforderungen für eine virtuelle Arbeitsumgebung (virtual Workspace), wie beteiligte Ressourcen in Form von physikalischen oder virtuelle Einheiten zur Speicherung, Verarbeitung oder Kommunikation bzw. -verbindung. KommunikationsdienstAnforderungen, wie Bandbreite, Verzögerung, Jitter, oder spezifische Protokollanforderungen (zum Beispiel Profinet IRT) können als Ende-zu-Ende-Verbindung definiert sein oder durch eine einfache (virtuelle) Verbindung festgelegt sein. Für den Fall, dass ein Infrastrukturlieferant eine Anforderung nicht bestätigen und/oder erfüllen kann, wird der Smart Contract benachrichtigt, das dazu führt, dass die Geschäftslogik ausgeführt wird, um nach einen alternativen Lieferanten zu suchen. Jede Ressource, welche im Ressourcenpool zur Verfügung steht, meldet dem Service (Dienst) sein Angebot sowie die Komponenten, die für die virtuelle Arbeitsumgebung angeboten werden können. Dies umfasst möglicherweise auch Anforderungen an die virtuelle Arbeitsumgebung. Im Fall, dass der Ressourcenanbieter die Anforderung nicht erfüllen kann, wird der Smart Contract benachrichtigt.

Mit 3 gekennzeichnet: Aufsetzen bzw. Bilden bzw. Einrichten einer Arbeitsumgebung: die Arbeitsumgebung wird durch Software zusammengestellt. Sie kann auch Hardware-Infrastruktur umfassen und eine Kommunikationsverbindung zu abgesetzten (remote) Cloud-Elementen beinhalten. Beteiligte Infrastruktur-Lieferanten teilen Ressourcen zu, setzen die virtuelle Arbeitsumgebung und bauen ein virtuelles Netzwerk gemäß der garantierten Ressourcen- Zuteilungen auf, welche auf den Signaturen gegeben durch den Smart Contract basieren. Die virtuelle Arbeitsumgebung mit ihren virtuellen Netzwerkschichten erlaubt eine exklusive Kommunikation zwischen den Vertragspartnern gemäß der Spezifikation und/oder Bedingungen im Vertrag. Das Aufsetzen der virtuellen Arbeitsumgebung wird während der Laufzeit des Systems durchgeführt, einschließlich der virtualisierten Ausführungsumgebung. Wenn notwendig- werden sogenannte Container, virtuelle Netzwerkfunktionen innerhalb eines virtuellen Mandantennetzwerkes - zum Beispiel mandantenspezifische Zugangskontrolle oder Verkehrsanpassung sowie virtuelle Netzwerkfunktionen auf Systemniveau verwendet. Das Aufsetzen der virtuellen Arbeitsumgebung wird durch den System-Eigentümer durchgeführt, wobei Mandanten bzw. Beteiligte im Mandantennetzwerk innerhalb der Arbeitsumgebung frei sind, die zugeteilten Ressourcen zu nutzen gemäß dem Vertrag, ohne weitere Interventionen/Konfigurationen des Systemeigentümers. Der Prozess des Aufsetzens benutzt gegebenenfalls die Infrastruktur, welche durch den Distributed Ledger zur Verfügung gestellt wird. Dies kann der unveränderbare Datenspeicher im Distributed Ledger zum Beispiel für spätere Audits oder Kryptographie Elemente wie öffentliche/private Schlüsselinfrastruktur, um Geräte zu identifizieren bzw. authentifizieren oder durchgeführte Transaktionen bzw. deren Schritte zu signieren.

Mit 4 gekennzeichnet: Fabrikaufgabe z.B. in Figur 1 genannte Kooperationsaufgabe, die einen Herstellungsprozeß umfassen kann: alle Beteiligten Maschinen benutzen die zugeteilten Ressourcen und führen ihre Fabrikaufgaben bzw. Herstellungsaufgaben aus.

Mit 5 gekennzeichnet: Prüfe auf korrekte und/oder vollständige Erledigung der Fabrikaufgabe: nachdem die Fabrikaufgabe beendet ist, prüfen alle beteiligten Maschinen auf vollständige korrekte Erledigung der Aufgabe und Erfüllung der Vereinbarung/des Vertrags durch den Smart Contract.

Mit 6 gekennzeichnet: Weitergabe des Endzustandes: der Smart Contract beinhaltet den Endzustand, um die beteiligten Infrastrukturlieferanten zu veranlassen, Ressourcen freizugeben. Mit 7 gekennzeichnet: Ressourcenfreigabe: nach Benachrichtigung, dass die Aufgabe erfolgreich erfüllt ist, welche vom Smart Contract empfangen worden ist, geben die beteiligten Infrastrukturlieferanten Ressourcen frei, d.h. die virtuelle Infrastruktur und das Herunterfahren aller Einheiten, welche Teil der virtuellen Arbeitsumgebung sind. Schließlich wird die Ressourcennutzung einschließlich seiner Signaturen an den Smart Contract berichtet.

Mit 8 gekennzeichnet: Vergebührung (Billing): Diese kann abhängig vom System-Aufbau und des Geschäftsmodells durchgeführt werden. Dieser Schritt ist optional.

Mit 9 gekennzeichnet: Supportdienste: Supportdienste liefern Funktionalitäten, wie das Überwachen der Infrastrukturbenutzung, Messen der Ressourcennutzung, Empfangen und Behandlung notwendiger Information (zum Beispiel Datenbenutzung oder Alarme) von der Infrastruktur, Pflegen der Infrastrukturkonfiguration und -verwendung. Supportfunktionen können Alarme generieren und Ereignisse auslösen (zum Beispiel im Fall, dass die Infrastruktur ausfällt, verletzen die Vertragspartner die Vereinbarung) und senden dies zu dem Distributed Ledger.

Mit 10 gekennzeichnet: Distributed Ledger: Distributed Ledger DL (zum Beispiel implementiert als Blockchain) liefert die Funktionalität, um Daten zu speichern und eine Geschäftslogik (zum Beispiel Smart Contract), die unveränderbar in einer dezentralisierten Weise für verschiedene unabhängige beteiligte Einheiten bzw. Parteien ist. Diese unabhängigen Einheiten können mittels des Smart Contracts einen Konsens erreichen und hierbei Vertrauen bzw. Sicherheit implizieren. Damit können jegliche Daten gespeichert und Vereinbarungen, welche relevant für die Ausführung von on demand Geschäftsbeziehungen zwischen verschiedenen beteiligten Parteien (zum Beispiel vereinbarte Anforderungen für die Ausführungsinfrastruktur, Ausführung von Maßnahmen und Vergebührungsinformation) getroffen werden.

Eine weitere Ausführungsform der Erfindung ist eine Überwachungseinheit bzw. -komponente (als Teil der Support-Services) für die Fabrik-Aufgaben-Ausführung, die in die Ausführungsinfrastruktur integriert ist, um verschiedene Parameter zu verfolgen und diese im Distributed Ledger zu speichern. Diese kann beispielsweise für eine spätere Vergebührung oder Eingabeparameter für weitere Smart Contract Verhandlungen bzw. Vereinbarungen verwendet werden, jedoch auch andere Smart Contracts während der Aufgabenausführung (als Seiteneffekt) auslösen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Steuervorrichtung (OM) zum Einrichten und/oder Bereitstellen einer Arbeitsumgebung, die wenigstens eine Ausführungseinheit (TM) zur Ausführung zumindest einer Fabrikaufgabe (CT) mit Hilfe von Maschinen (D1, D2, D3, D4, TP, MR) umfasst, aufweisend:
- eine Ressourcenverwaltungseinheit zum Anfordern von für die Arbeitsumgebung notwendigen Ressourcen,
- eine Abgleicheinheit, die dazu eingerichtet ist, die angeforderten Ressourcen mit zumindest einer in einer verbindlichen, in einer verteilten Datenbank (DL) hinterlegten Vereinbarung vereinbarten Ressource abzugleichen und abhängig vom Abgleichergebnis zuzulassen, wobei
- die Steuervorrichtung (OM) dazu eingerichtet ist, die Arbeitsumgebung mit mindestens einer abgeglichenen und zugelassenen Ressource einzurichten und/oder bereitzustellen, wobei die Ressourcen aus einem Ressourcenpool umfassend Einheiten zur Speicherung, Verarbeitung oder Kommunikation bereitgestellt werden;
wobei die mindestens eine Ausführungseinheit (TM) dazu eingerichtet ist, nach Einrichtung und/oder Bereitstellen der Arbeitsumgebung durch die Steuervorrichtung (OM) die mindestens eine abgeglichene und zugelassene Ressource zu nutzen und die zumindest eine Fabrikaufgabe (CT) auszuführen; und
wobei die Steuervorrichtung dazu eingerichtet ist, eine Freigabe der genannten Ressourcen zu veranlassen und/oder diese selbst durchzuführen,
**dadurch gekennzeichnet, dass**:
die mindestens eine Ausführungseinheit (TM) dazu eingerichtet ist, das Prüfen auf korrekte und/oder vollständige Fabrikaufgabenerledigung durch eine oder mehrere an der Arbeitsumgebung beteiligte Maschinen (D1, D2, D3, D4, TP, MR) zu koordinieren und die Steuervorrichtung (OM) dazu eingerichtet ist, für den Fall, dass ein Infrastrukturlieferant eine in der Vereinbarung beinhaltete Anforderung nicht bestätigen und/oder erfüllen kann, nach einem alternativen Lieferanten zu suchen.

2. Steuervorrichtung (OM) nach Anspruch 1, **dadurch gekennzeichnet, dass** die Vereinbarung als Smart Contract ausgestaltet ist, der in einer oder mehreren Blockchain (DL) gespeichert ist.

3. Steuervorrichtung (OM) nach einem der vorhergehenden Ansprüche, **dadurch gekennzeichnet, dass** die mindestens eine Ausführungseinheit zudem eine Überwachungseinheit aufweist, die dazu eingerichtet ist, um die zur Ausführung der mindestens einen Aufgabe (CT) notwendigen Parameter zu protokollieren und gegebenenfalls in der Blockchain (DL) zu speichern.

4. Verfahren zum Einrichten und/oder Bereitstellen einer Arbeitsumgebung zur Ausführung zumindest einer Fabrikaufgabe (CT) mit Hilfe von Maschinen (D1, D2, D3, D4, TP, MR) aufweisend folgende Schritte:
- Anfordern (2) von für die Arbeitsumgebung notwendigen Ressourcen aus einem Ressourcenpool umfassend Einheiten zur Speicherung, Verarbeitung oder Kommunikation,
- Abgleichen der angeforderten Ressourcen mit zumindest einer in einer verbindlichen, in einer verteilten Datenbank (DL) hinterlegten Vereinbarung vereinbarten Ressource und Zulassen dieser Ressource abhängig vom Abgleichergebnis,
- Einrichten und/oder Bereitstellen (3) der Arbeitsumgebung mit mindestens einer abgeglichenen und zugelassenen Ressource,
- nach Einrichtung und/oder Bereitstellen der Arbeitsumgebung Nutzen der mindestens einen abgeglichenen und zugelassenen Ressource und Ausführen (4) der zumindest einen Aufgabe (CT);
- Koordinierung der Prüfung (4) auf korrekte und/oder vollständige Fabrikaufgabenerledigung durch eine oder mehrere an der Arbeitsumgebung beteiligte Maschinen (D1, D2, D3, D4, TP, MR) ;
- Veranlassen (7) und/oder Durchführen einer Freigabe (7) der genannten Ressourcen und für den Fall, dass ein Infrastrukturlieferant eine in der Vereinbarung beinhaltete Anforderung nicht bestätigen und/oder erfüllen kann, Veranlassen einer Suche nach einem alternativen Lieferanten.

5. Verfahren nach einem der vorhergehenden Verfahrensansprüche, **dadurch gekennzeichnet, dass** die Vereinbarung als Smart Contract ausgestaltet ist, der in einer oder mehreren Blockchain gespeichert ist.

6. Verfahren nach einem der vorhergehenden Verfahrensansprüche, **dadurch gekennzeichnet, dass** die zur Ausführung der mindestens einen Aufgabe (CT) notwendigen Parameter protokolliert und gegebenenfalls in der Blockchain gespeichert wird.

7. Verfahren nach einem der vorhergehenden Verfahrensansprüche, **dadurch gekennzeichnet, dass** nach Einrichtung und/oder Bereitstellen der Arbeitsumgebung eine Vergebührung (8) der zugelassenen Ressourcen durchgeführt wird.

8. Computerprogrammprodukt, welches auf einer programmgesteuerten Vorrichtung, insbesondere der Steuervorrichtung nach einem der vorhergehenden Vorrichtungsansprüchen, die Durchführung des Verfahrens nach einem der vorhergehenden Verfahrensansprüche veranlasst.

9. Computerprogrammprodukt nach Anspruch 8, wobei die programmgesteuerte Vorrichtung eine Steuervorrichtung nach einem der vorhergehenden Vorrichtungsansprüchen ist.

## Claims

1. Control device (OM) for setting up and/or providing a work environment that comprises at least one performance unit (TM) for performing at least one factory task (CT) using machines (D1, D2, D3, D4, TP, MR), comprising:
- a resource management unit for requesting resources needed for the work environment,
- a comparison unit configured to compare the requested resources with at least one resource agreed in a binding agreement stored in a distributed database (DL) and to approve said resources on the basis of the comparison result, wherein
- the control device (OM) is configured to set up and/or provide the work environment using at least one compared and approved resource, the resources being provided from a resource pool comprising units for storage, processing or communication; wherein the at least one performance unit (TM) is configured to follow setup and/or provision of the work environment by the control device (OM) by using the at least one compared and approved resource and performing the at least one factory task (CT); and
wherein the control device is configured to instigate a release of said resources and/or to perform said release itself, **characterized in that**:
the at least one performance unit (TM) is configured to coordinate the check for correct and/or entire factory task completion by one or more machines (D1, D2, D3, D4, TP, MR) involved in the work environment, and the control device (OM) is configured to look for an alternative supplier if an infrastructure supplier is unable to confirm and/or meet a requirement included in the agreement.

2. Control device (OM) according to Claim 1, **characterized in that** the agreement is embodied as a smart contract stored in one or more blockchains (DL).

3. Control device (OM) according to either of the preceding claims, **characterized in that** the at least one performance unit also has a monitoring unit configured to log the parameters needed for performing the at least one task (CT) and if necessary to store said parameters in the blockchain (DL).

4. Method for setting up and/or providing a work environment for performing at least one factory task (CT) using machines (D1, D2, D3, D4, TP, MR), comprising the following steps:
- requesting (2) resources needed for the work environment from a resource pool comprising units for storage, processing or communication,
- comparing the requested resources with at least one resource agreed in a binding agreement stored in a distributed database (DL) and approving said resources on the basis of the comparison result,
- setting up and/or providing (3) the work environment using at least one compared and approved resource,
- following setup and/or provision of the work environment by using the at least one compared and approved resource and performing (4) the at least one task (CT);
- coordinating the check (4) for correct and/or entire factory task completion by one or more machines (D1, D2, D3, D4, TP, MR) involved in the work environment;
- instigating (7) and/or performing a release (7) of said resources and instigating a search for an alternative supplier if an infrastructure supplier is unable to confirm and/or meet a requirement included in the agreement.

5. Method according to one of the preceding method claims, **characterized in that** the agreement is embodied as a smart contract stored in one or more blockchains.

6. Method according to either of the preceding method claims, **characterized in that** the parameters needed for performing the at least one task (CT) are logged and if necessary stored in the blockchain (DL).

7. Method according to one of the preceding method claims, **characterized in that** setup and/or provision of the work environment is followed by billing (8) for the approved resources being performed.

8. Computer program product that instigates performance of the method according to one of the preceding method claims on a program-controlled device, in particular the control device according to one of the preceding device claims.

9. Computer program product according to Claim 8, wherein the program-controlled device is a control device according to one of the preceding device claims.

## Revendications

1. Dispositif de commande (OM) pour la configuration et/ou la fourniture d'un environnement de travail qui comporte au moins une unité d'exécution (TM) pour l'exécution d'au moins une tâche de manufacture (CT) à l'aide de machines (D1, D2, D3, D4, TP, MR), comprenant :
- une unité de gestion de ressources pour la requête de ressources nécessaires pour l'environnement de travail,
- une unité de synchronisation qui est configurée pour synchroniser les ressources requises avec au moins une ressource convenue dans une convention contraignante déposée dans une base de données distribuée (DL) et pour les autoriser en fonction du résultat de synchronisation,
- le dispositif de commande (OM) étant configuré pour configurer et/ou fournir l'environnement de travail avec au moins une ressource synchronisée et autorisée, les ressources étant fournies à partir d'un pool de ressources comportant des unités pour le stockage, le traitement ou la communication ;
dans lequel l'au moins une unité d'exécution (TM) est configurée, après configuration et/ou fourniture de l'environnement de travail par le dispositif de commande (OM), pour utiliser l'au moins une ressource synchronisée et autorisée et pour exécuter l'au moins une tâche de manufacture (CT) ; et
le dispositif de commande étant configuré pour provoquer un partage desdites ressources et/ou pour mettre en oeuvre celui-ci par lui-même,
**caractérisé en ce que** :
l'au moins une unité d'exécution (TM) est configurée pour coordonner le contrôle de l'accomplissement correct et/ou complet de la tâche de manufacture par une ou plusieurs machines (D1, D2, D3, D4, TP, MR) impliquées dans l'environnement de travail et le dispositif de commande (OM) est configuré pour rechercher un fournisseur de remplacement dans le cas où un fournisseur d'infrastructures ne peut pas confirmer et/ou satisfaire à une requête incluse dans la convention.

2. Dispositif de commande (OM) selon la revendication 1, **caractérisé en ce que** la convention est conçue en tant que contrat intelligent (Smart Contract) qui est stocké dans une ou plusieurs chaînes de bloc (Blockchain) (DL).

3. Dispositif de commande (OM) selon l'une des revendications précédentes, **caractérisé en ce que** l'au moins une unité d'exécution comprend en outre une unité de surveillance qui est configurée pour journaliser les paramètres nécessaires à l'exécution de l'au moins une tâche (CT) et éventuellement pour les stocker dans la chaîne de blocs (DL).

4. Procédé pour la configuration et/ou la fourniture d'un environnement de travail pour l'exécution d'au moins une tâche de manufacture (CT) à l'aide de machines (D1, D2, D3, D4, TP, MR) comprenant les étapes suivantes :
- requête (2) de ressources nécessaires pour l'environnement de travail, issues d'un pool de ressources comportant des unités pour le stockage, le traitement ou la communication,
- synchronisation des ressources requises avec au moins une ressource convenue dans une convention contraignante déposée dans une base de données distribuée (DL) et autorisation de cette ressource en fonction du résultat de synchronisation,
- configuration et/ou fourniture (3) de l'environnement de travail avec au moins une ressource synchronisée et autorisée,
- après configuration et/ou fourniture de l'environnement de travail, utilisation de l'au moins une ressource synchronisée et autorisée et exécution (4) de l'au moins une tâche (CT) ;
- coordination du contrôle (4) de l'accomplissement correct et/ou complet de la tâche de manufacture par une ou plusieurs machines (D1, D2, D3, D4, TP, MR) impliquées dans l'environnement de travail ;
- provocation (7) et/ou mise en œuvre d'un partage (7) desdites ressources et, dans le cas où un fournisseur d'infrastructures ne peut pas confirmer et/ou satisfaire à une requête incluse dans la convention, provocation d'une recherche d'un fournisseur de remplacement.

5. Procédé selon l'une des revendications de procédé précédentes, **caractérisé en ce que** la convention est conçue en tant que contrat intelligent qui est stocké dans une ou plusieurs chaînes de bloc.

6. Procédé selon l'une des revendications de procédé précédentes, **caractérisé en ce que** les paramètres nécessaires à l'exécution de l'au moins une tâche (CT) sont journalisés et éventuellement stockés dans la chaîne de blocs.

7. Procédé selon l'une des revendications de procédé précédentes, **caractérisé en ce que**, après configuration et/ou fourniture de l'environnement de travail, une facturation (8) des ressources autorisées est mise en oeuvre.

8. Produit de programme informatique, lequel provoque la mise en oeuvre du procédé selon l'une des revendications de procédé précédentes sur un dispositif commandé par programme, en particulier le dispositif de commande selon l'une des revendications de dispositif précédentes.

9. Produit de programme informatique selon la revendication 8, dans lequel le dispositif commandé par programme est un dispositif de commande selon l'une des revendications de dispositif précédentes.
